# FASCICULE DE BREVET EUROPEEN

(11) **EP 2 380 261 B1**
(45) Date de publication et mention de la délivrance du brevet: **13.04.2016**
(21) Numéro de dépôt: 10707324.9
(22) Date de dépôt: 20.01.2010
(51) Int. Cl.: H02K 11/00, H02K 29/10, H02K 3/28

(54) **MOTEUR PHOTOVOLTAÏQUE AUTOCOMMUTÉ**
SELBSTGEFÜHRTER PHOTOVOLTAISCHER MOTOR
SELF SWITCHED PHOTOVOLTAIC MOTOR

(30) Priorité: 19.01.2009 FR 0950311
(43) Date de publication de la demande: 26.10.2011
(73) Titulaire: Coty, Alain, 95450 Sagy (FR)
(72) Inventeur: Coty, Alain, 95450 Sagy (FR)
(74) Mandataire: Ipside
(86) Numéro de dépôt international: PCT/FR2010/050083
(87) Numéro de publication internationale: WO 2010/082007

(56) Documents cités:
- US-A- 3 296 469
- US-A- 4 634 343
- US-A- 4 751 413
- US-A1- 2007 075 599

## Description

### Domaine de l'invention

La présente invention a pour objet un moteur photovoltaïque autocommuté. Plus particulièrement, la présente invention a pour objet une machine à reluctance variable autocommutée pour l'alimentation en courant électrique des phases du moteur.

### Etat de la technique

Actuellement il existe des moteurs électriques alimentés par un générateur photovoltaïque. L'énergie dispensée par le soleil est convertie en énergie mécanique au moyen d'un moteur électrique raccordé à des cellules photovoltaïques.

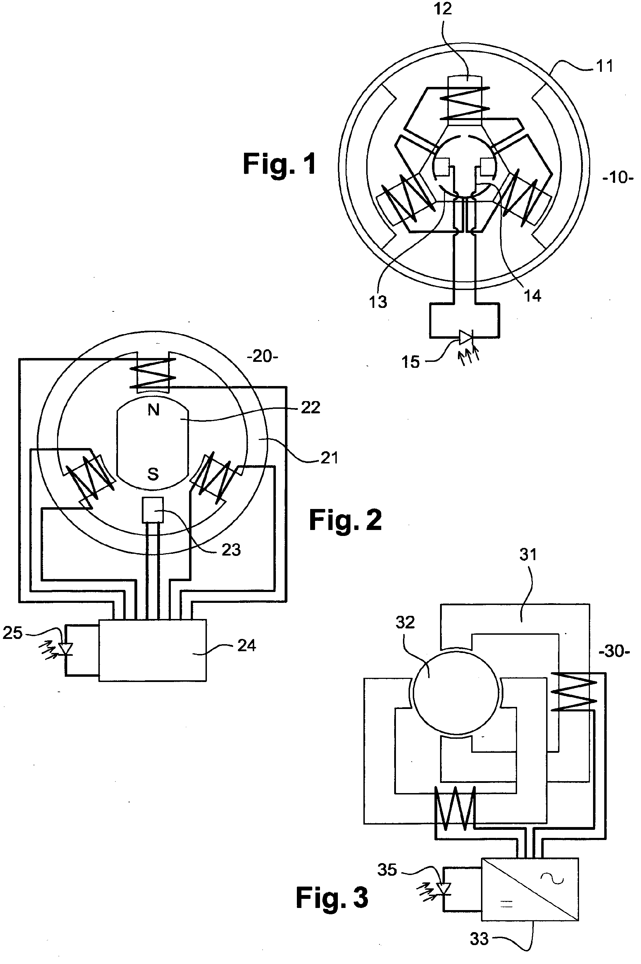

Un exemple d'un tel moteur est montré à la figure 1. La figure 1 montre un moteur 10 à aimants permanents à courant continu. Le moteur 10 comporte un stator 11 à deux pôles à aimants permanents et un rotor 12 comportant des enroulements. Le moteur 10 est alimenté par un générateur photovoltaïque 15. Le moteur 10 comporte un dispositif de commutation mécanique formé par un collecteur 13 et un porte-balai 14. Le collecteur 13 est relié aux enroulements et solidaire de l'axe du moteur 10. Le collecteur 13 et les balais 14 permettent de commuter successivement le courant dans les différents enroulements du rotor.

Toutefois ce moteur ci-dessus décrit présente des inconvénients. En effet, l'usure des collecteurs 13 et des balais 14 limite la durée de vie du moteur 10 à courant continu. En outre, l'usure des balais 14 et l'encrassement du collecteur provoquent des courts-circuits entre les lames imposant une maintenance fréquente. La résistance de contact génère également des pertes aux balais qui réduisent le rendement du moteur 10.

La figure 2 montre un autre exemple de moteur 20 de l'état de la technique, dit sans balais. Le moteur 20 comporte un rotor 22 à aimant permanent et un stator 21 comportant des enroulements. Le rotor 22 est fixé sur l'arbre du moteur 20. Le moteur 20 est alimenté par un générateur photovoltaïque 25. Le moteur 20 comporte un dispositif de commutation électronique formé d'un capteur 23 associée à une électronique 24 de commande. L'électronique 24 de commande commute le courant dans les enroulements en fonction de la position du rotor 22 déterminée par le capteur 23. Le commutateur mécanique de la figure 1 est ici remplacé par une électronique de puissance associée à un capteur.

L'inconvénient principal du moteur 20 décrit à la figure 2 est d'exiger une électronique plus compliquée en raison d'une alimentation polyphasée. De ce fait, le prix de l'électronique ajouté à celui du moteur est généralement supérieur au moteur à courant continu de la figure 1. En outre, l'utilisation d'un capteur de position présente des inconvénients d'asservissement dus principalement à sa précision de calage.

En outre, les commutateurs mécaniques ou électroniques des figures 1 ou 2 consomment une fraction de la puissance électrique disponible aux bornes du générateur photovoltaïque. Ces dispositifs électroniques ou mécaniques de commutation nécessitent également des entretiens réguliers afin d'améliorer la durée de vie du moteur augmentant en conséquence le coût de maintenance desdits moteurs. En outre, les condensateurs de récupération d'énergie nécessaires au bon fonctionnement des étages de puissance ont une durée de vie limitée constituant ainsi un autre point faible des dispositifs de commutation.

La figure 3 montre un autre exemple de moteurs 30 alternatifs de l'état de la technique, de type asynchrones ou autres. Le moteur 30 comporte un stator 31 comportant des enroulements et relié à un convertisseur 33 pour transformer le courant continu fourni par un générateur 35 photovoltaïque en courant alternatif. Le moteur 30 comporte un rotor 32 constitué de conducteurs en court-circuit qui sont parcourus par des courants induits par le champ magnétique créé par les courants statoriques.

Toutefois ce moteur alternatif présente des inconvénients. En effet, du fait que le générateur 35 photovoltaïque ne délivre que du courant continu, il est alors nécessaire d'interposer, entre les bobinages du moteur 20 et le générateur 35, un dispositif électronique comportant un convertisseur ou onduleur et un circuit électronique de commande plus complexe que ceux des moteurs à courant continu décrits aux figures 1 et 2.

Aujourd'hui, pour faire fonctionner un moteur via l'énergie solaire, il est nécessaire de mettre en place un dispositif intermédiaire entre les bobines et le générateur photovoltaïque. Ce dispositif intermédiaire comporte entre autres :
- une partie logique qui se charge de faire en sorte que le moteur agisse de façon cohérente et qui détermine la vitesse, le sens de rotation ainsi que l'alimentation ou non du moteur lorsque celui-ci est arrêté,
- un contrôleur qui veille à alimenter les bobines selon un ordre prédéfini, et
- une interface de puissance qui permet de faire circuler des courants dans les bobines du moteur.

Ces dispositifs intermédiaires de l'état de la technique, plus ou moins complexes, entre les enroulements et les cellules photovoltaïques augmentent le coût des moteurs, et en altèrent la fiabilité.

Le document US-A-4 634 343 décrit un moteur photovoltaïque autocommuté comprenant des cellules photovoltaïques et un masque, entrainé par l'arbre mobile, et comprenant quatre ouvertures de commutation.

### Exposé de l'invention

L'invention a justement pour but de remédier aux inconvénients des techniques exposées précédemment. Pour cela, l'invention propose un moteur photovoltaïque autocommuté ne nécessitant aucun aimant, aucun dispositif de commutation et aucun convertisseur. Pour ce faire, chaque bobine de l'invention est directement raccordée à une cellule photovoltaïque. Dans l'invention, les cellules sont disposées autour du moteur. Pour réaliser la commutation, un masque est placé sur l'arbre du moteur. Ce masque comporte des parties transparentes et des parties opaques. Lors de la rotation du moteur, les cellules photovoltaïques situées sous les parties transparentes alimentent le moteur. Le masque permet d'obtenir un moteur photovoltaïque autocommuté sans aucun dispositif intermédiaire entre les bobines et les cellules.

L'invention a donc pour objet un moteur photovoltaïque autocommuté à reluctance variable comportant :
- un rotor entraînant un arbre mobile en rotation par rapport à un stator,
- le stator comportant plusieurs enroulements définissant des phases du moteur,
caractérisé en ce qu'il comporte
- des cellules photovoltaïques disposées autour du stator, chacune des cellules étant raccordée à un des enroulements du stator,
- un masque fixé à l'arbre mobile et positionné de sorte à recouvrir les cellules photovoltaïques,
- le masque comportant au moins une ouverture de commutation des cellules photovoltaïques.

Avantageusement, l'invention est également caractérisée en ce que :
- le moteur est une machine à reluctance variable
- les cellules photovoltaïques sont disposées en couronne autour du stator.
- le masque comporte quatre ouvertures disposées en paire diamétralement opposées.
- le masque est un disque opaque comportant des ouvertures percées.
- le masque est une succession de matériau opaque et de matériau transparent formant les ouvertures.
- le rotor comporte quatre branches et le stator comporte six enroulements à 60 degrés les uns des autres, une paire d'enroulements diamétralement opposés définissant une phase du moteur.
- les ouvertures sont disposées sur le masque de manière à ce qu'une seule paire de cellules photovoltaïques d'une paire d'enroulements d'une phase soit alimentée à la fois, lors de la rotation du moteur.
- les ouvertures du masque sont à 90 degrés les unes des autres.
- le moteur comporte des cellules photovoltaïques secondaires dont chacune est reliée en série à une cellule photovoltaïque, une cellule secondaire est placée sur la couronne par rapport à la cellule photovoltaïque dont elle est reliée en série, de sorte à permettre son éclairement lorsque ladite cellule est éclairée.
- le moteur comporte une cellule photovoltaïque fixe et toujours éclairée, ladite cellule fixe étant raccordée à au moins une bobine au travers de la cellule photovoltaïque correspondante.

L'invention a également pour objet un système dans lequel est installé un moteur photovoltaïque autocommuté à reluctance variable selon l'invention.

### Brève description des dessins

L'invention sera mieux comprise à la lecture de la description qui suit et à l'examen des figures qui l'accompagnent. Celles-ci sont présentées à titre indicatif et nullement limitatif de l'invention.
Les figures 1, 2 et 3 montrent chacun un exemple de moteur photovoltaïque de l'état de la technique.
La figure 4 montre une représentation schématique d'un moteur photovoltaïque muni des moyens perfectionnés de l'invention.
La figure 5 montre une représentation schématique d'un masque de commutation solidaire de l'arbre du moteur.
Les figures 6 et 7 montrent des modes de réalisation d'un moteur photovoltaïque muni des moyens perfectionnés de l'invention et apte à augmenter la puissance mécanique du moteur.

### Description détaillée de modes de réalisation de l'invention

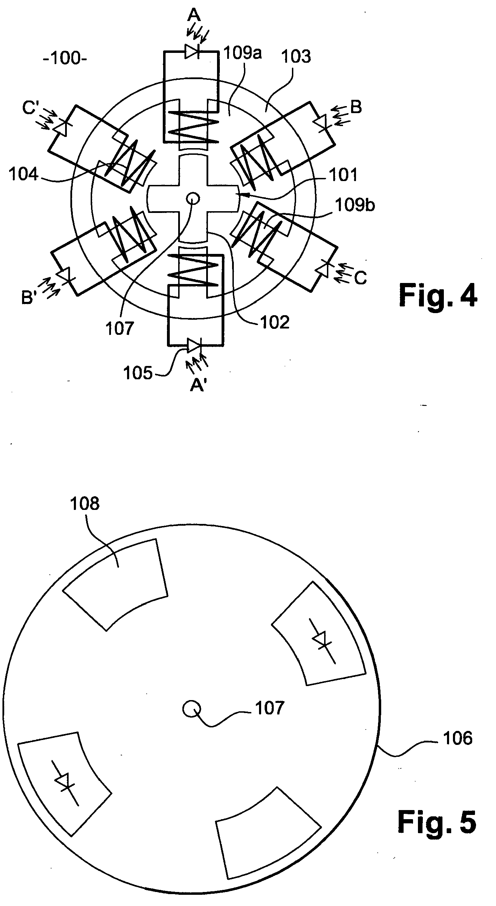

La figure 4 montre un moteur pas à pas comportant les moyens perfectionnés de l'invention. Dans l'exemple de la figure 4, les moyens perfectionnés de l'invention sont appliqués à un moteur 100 à réluctance variable. Le moteur 100 à réluctance variable est incontestablement le moteur électrique le plus simple que l'on puisse réaliser. De plus, ne nécessitant aucun aimant, le fonctionnement de ce moteur 100 est indépendant du sens du courant ; il n'y a pas de polarité à respecter. Le sens de rotation ne dépend pas du sens du courant mais de l'ordre d'alimentation des bobines du moteur 100.

Le moteur 100 comporte un rotor 101. Le rotor 101 est un cylindre non aimanté dans lequel sont taillées des dents qui sont des pôles 102 du rotor 101. Le mouvement du rotor 101 est indépendant du sens d'alimentation des différentes phases du moteur : le choix de la séquence d'alimentation détermine son sens de rotation. Les pôles 102 du rotor 101 se positionnent dans la direction de la plus faible réluctance. Dans l'exemple de la figure 4, le rotor 101 comporte quatre pôles 102.

Le moteur 100 comporte un stator 103. Le stator 103 est de préférence un empilage de tôles découpées pour diminuer les courants de Foucault, encochées où sont logées des bobines 104. Dans un mode de réalisation préféré, le rotor 101 est un empilage de tôles comme le stator 103. Les tôles sont de préférence en fer silicium. Dans une variante, le rotor et le stator peuvent être réalisés dans du fer doux massif particulièrement lorsque le moteur est lent.

Dans l'exemple de la figure 4, le stator 103 comporte six encoches 109a. Ces encoches 109a sont délimitées de manière alternée par des dents 109b du stator 103 recevant chacun une bobine 104. Les dents 109b des bobines 104 sont à 30 degrés les unes des autres.

Une phase du moteur est formée par une paire de bobines 104 diamétralement opposées. Le moteur 100 comporte ainsi trois phases une phase AA', BB' et CC'. La phase AA' correspond à l'alimentation à la fois de la bobine A et de la bobine A' et ainsi de suite. Le rotor 101 comporte moins de pôles qu'il n'y a de dents au stator 103.

Lorsqu'on alimente en même temps une paire de bobines 104, les pôles 102 du rotor 101 se placent de façon à ce que le flux qui les traverse soit maximal (ou réluctance minimale). Ainsi, lorsqu'une bobine 104 est alimentée, elle attire un pôle 102 du rotor 101 le plus proche de telle sorte que le flux embrassé soit maximal. Les pôles 102 du rotor 101 se positionnent entre les encoches 109a des bobines 104 alimentées. Le rotor 101 avance ainsi d'un pas à chaque impulsion de courant sur une nouvelle paire de bobine 104. Le fait d'alimenter en même temps une paire de bobines permet de procurer un couple élevé au moteur 100.

Pour alimenter les bobines 104, chacune d'elle est raccordée à une cellule 105 photovoltaïque. Les cellules 105 photovoltaïques sont disposées tout autour du stator 103. Dans un mode de réalisation préféré, les cellules 105 photovoltaïques sont disposées de manière circulaire autour du stator 103. Elles sont disposées les unes par rapport aux autres selon l'agencement des encoches 109a. Dans l'exemple de la figure 5, elles sont à 60 degrés les unes des autres en couronne autour du stator 103.

Toutefois, le moteur 100 ne risque pas de tourner si toutes les bobines 104 sont simultanément alimentées par les cellules 105 photovoltaïques. L'invention propose de commuter de manière successive l'alimentation des bobines sans utiliser de circuit électronique de pilotage ni de commutateur mécanique. Dans l'invention, pour faire avancer le rotor 101 d'un pas, un masque 106 d'alignement est disposé sur les cellules 105 photovoltaïques, tel que montré à la figure 5. Ce masque 106 a une surface apte à recouvrir les cellules 105 photovoltaïques.

Le masque 106 est monté sur un arbre 107 du moteur 100. Le masque 106 est ainsi solidaire au rotor 101. Le masque 106 d'alignement est positionné par rapport aux cellules 105 photovoltaïques.

Dans un mode de réalisation préféré, le masque 106 est un disque opaque à la lumière comportant des ouvertures 108 aptes à laisser passer la lumière. Les ouvertures 108 peuvent être des trous pratiquées sur le masque 106. Dans une variante, le masque 106 peut être une succession de matériau opaque et de matériau transparent formant les ouvertures 108.

Dans un mode de réalisation préféré, le masque 106 comporte quatre ouvertures 108. Ces ouvertures 108 sont disposées en paire diamétralement opposées. Elles sont disposées sur le masque 106 de telle sorte à faire aligner une paire d'ouvertures 108 avec les cellules 105 photovoltaïques d'une paire de bobines 104. Les ouvertures 108 sont aménagées sur le masque 106 de manière à ce qu'une seule paire de cellules 105 photovoltaïques d'une paire de bobines 104 soit alimentée à la fois. Dans l'exemple de la figure 5, les ouvertures 108 sont à 90 degrés les unes des autres. Le masque 106 est réalisé dans un matériau obturant de préférence étanche.

Lorsque les cellules 105 photovoltaïques d'une paire de bobines sont éclairées par une paire d'ouvertures, alors une impulsion de commande est appliquée au moteur 100 de sorte à faire avancer le rotor 101 d'un pas de 30 degrés. Ce mouvement du rotor 101 entraîne la rotation du masque 106 et l'éclairement des cellules 105 photovoltaïques de la paire de bobines 104 suivantes. Ainsi, la rotation du moteur 100 démasque successivement les cellules 105 deux à deux. Le masque 106 joue ainsi un rôle de commutateur optique où le mouvement du rotor 101 est obtenu par l'éclairement tour à tour des cellules 105 photovoltaïques d'une paire de pôles du stator 103.

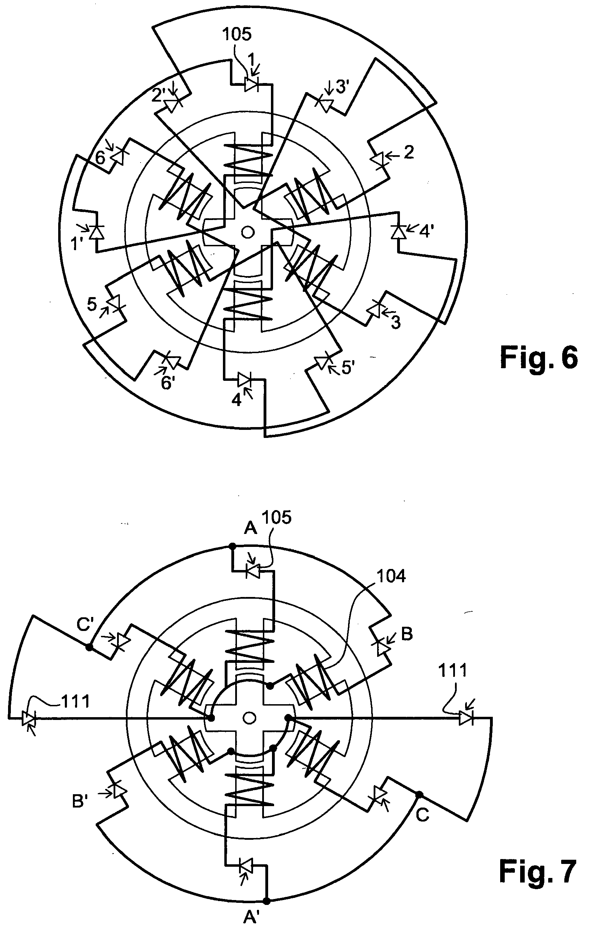

L'exemple de la figure 6 montre un mode de réalisation de l'invention où la puissance mécanique disponible est doublée par rapport à celle de la figure 5. Pour ce faire, en plus des cellules 105 photovoltaïques primaires de la figure 5, le moteur 100 comporte des cellules 110 photovoltaïques secondaires. Chaque cellule 105 photovoltaïque primaire est reliée en série à une cellule 110 photovoltaïque secondaire. Les cellules 110 photovoltaïques secondaires sont disposées sur des espaces vides entre les cellules 105 primaires. Elles sont placées à 30 degrés de deux cellules 105 primaires successives.

Une cellule 110 secondaire est placée sur la couronne par rapport à la cellule 105 photovoltaïque primaire, dont elle est reliée en série, de sorte à permettre son éclairement lorsque ladite cellule primaire est éclairée. Ainsi, la position de cette cellule 110 secondaire sur la couronne par rapport à la cellule 105 primaire dont elle est reliée en série dépend de la disposition des ouvertures 108 sur le masque 106. Ainsi, dans l'exemple de la figure 6, la cellule 110 secondaire est à 90 degrés par rapport à la cellule 105 photovoltaïques primaire dont elle est reliée en série.

Avec l'exemple de la figure 6, les espaces entre les cellules de la figure 5 sont comblés par de nouvelles cellules raccordées, deux à deux, en série avec les précédentes en respectant le schéma dessiné à la figure 5 et la disposition des ouvertures 108 sur le masque 106. Les cellules sont ainsi maintenant commutées quatre à quatre, permettant ainsi de doubler la puissance mécanique disponible.

Dans une variante, les cellules 110 ajoutées dans les espaces vides sont raccordées à un second moteur solidaire de l'arbre 107 du premier moteur 100. Dans ce cas, tout ce passe comme s'il y avait deux couronnes de cellules indépendantes. Comme précédemment, la puissance mécanique est doublée ; au prix toutefois d'une plus grande complexité mécanique.

La figure 7 montre une autre variante pour augmenter la puissance mécanique disponible. Dans l'exemple de la figure 7, en plus des cellules 105 photovoltaïques, le moteur 100 est alimenté par au moins une cellule 111 fixe. La cellule 111 fixe a une surface largement supérieure à celle des cellules 105 photovoltaïque de la figure 5. Cette cellule 111 fixe est constamment éclairée. La cellule 111 fixe est reliée en série à au moins une cellule 105 photovoltaïques. Les bobines 104 sont raccordées à la cellule 111 fixe au travers des cellules 105 photovoltaïques correspondantes.

Lorsqu'une cellule 105 photovoltaïque n'est pas éclairée, son impédance interne croît considérablement. Une cellule 105 aveugle est assimilable à un circuit ouvert. Ainsi, les cellules 105 peuvent être utilisées non seulement comme des générateurs cycliques de courant, mais aussi comme des interrupteurs interposés entre les bobines et la cellule 111 de grande surface constamment éclairée. Ainsi, en reliant en série la cellule 111 fixe à une cellule 105 photovoltaïque l'énergie de la cellule 111 fixe ne circule dans ladite cellule 105 photovoltaïque que lorsque cette dernière est éclairée. Dans ce cas, la puissance du moteur 100 n'est augmentée que lorsque ladite cellule 105 photovoltaïque est commutée.

Dans l'exemple de la figure 7, la cellule 111 fixe est raccordée à une des bobines 104 de toutes les paires de bobines du moteur 100. De ce fait, à chaque fois qu'une paire de cellules est éclairée, la puissance du moteur 100 est augmentée. Pour doubler cette puissance du moteur 100, il est prévu dans l'exemple de la figure 7 de raccorder l'autre paire des bobines 104 de toutes les paires de bobines, libres, à une autre cellule 112 fixe. Dans l'exemple de la figure 7, les bobines A, B et C' sont raccordées à la cellule 111 fixe et les bobines C, A' et B' sont raccordées à l'autre cellule 112 fixe.

Les deux principaux avantages du moteur photovoltaïque autocommuté de l'invention sont sa simplicité de réalisation et son absence d'usure. En effet, pour autant que le moteur soit équipé de roulements à billes de qualité, sa durée de vie équivaut à celle des cellules 105 photovoltaïques ; c'est à-dire, aujourd'hui, environ vingt à vingt cinq ans.

Accouplé à une pompe centrifuge, un tel moteur peut servir à élever l'eau des puits creusés dans des régions où le soleil est abondant. Non seulement le moteur ne nécessite pas d'entretien, mais le disque percé de fenêtres en matériau transparent assure une protection des cellules contre le sable. En effet, les cellules photovoltaïques sont protégées par le masque obturant qui forme un couvercle étanche. De plus, la rotation du disque, en éjectant le sable qui se dépose naturellement à sa surface, assure un rendement constant dans le temps.

Le moteur de l'invention est également avantageux pour l'équipement d'une serre. En effet, l'arbre du moteur, fixé au dessus du toit, entraîne directement les pales d'une turbine placée à l'intérieur de la serre. Ce dispositif procure une ventilation économique d'autant plus efficace que le rayonnement solaire est intense; c'est à dire précisément lorsque la température de la serre est la plus élevée.

Des extracteurs d'air comportant le moteur photovoltaïque de l'invention peuvent être montés sur des camions dont la cargaison nécessite une ventilation forcée. C'est, par exemple, le cas lors du transport d'animaux. Avec l'avantage qu'à l'arrêt, en plein soleil, les extracteurs d'air à moteur photovoltaïque fonctionnent sans épuiser la batterie du véhicule.

Le moteur de l'invention peut être également utilisé dans des procédés de microfabrications collectives qui permettent de réaliser des moteurs de tailles submillimétriques. Tout naturellement, de par sa simplicité, c'est la machine à réluctance variable qui a donné lieu au plus grand nombre de réalisations. Or, les cellules photovoltaïques sont aussi des dispositifs issus des procédés de fabrication des composants électroniques. Ainsi, on peut réaliser un moteur en gravant sur un même substrat en silicium un micromoteur à réluctance variable et des cellules photovoltaïques. Si, de plus, les cellules sont illuminées au moyen d'un toron de fibres optiques, ce moteur fonctionne sans alimentation électrique extérieure. Un tel moteur trouve son application dans des milieux explosifs où tout risque d'étincelle est banni.

L'invention ne se limite pas aux modes de réalisation représentés sur les figures. En particulier, L'invention peut être également appliquée à des moteurs hybrides. En outre le nombre d'ouverture d'un masque n'est pas limité à quatre. Il peut être supérieur ou inférieur à quatre selon le type de moteur à alimenter et la puissance mécanique voulue. De même, le nombre de pôles du rotor et du stator n'est donné qu'à titre d'exemples.

Le moteur de l'invention peut comporter en outre des moyens de nettoyage des cellules photovoltaïques. Ces moyens de nettoyage peuvent être un balai installé sur le masque sur une face en contact avec les cellules photovoltaïques. Ces moyens de nettoyage peuvent être également un verre affleurant placés aux ouvertures du masque. Pour améliorer le nettoyage des cellules photovoltaïques, le moteur peut être incliné par rapport à un plan horizontal. Cette inclinaison du moteur permet également d'orienter au mieux les cellules photovoltaïques vers le soleil qui n'est pas toujours à la verticale du lieu où est installé le moteur.

Les dimensions des cellules photovoltaïques commutées et éventuellement de la cellule fixe dépendent de la puissance mécanique voulue. Les différents éléments du moteur sont dimensionnés par rapport à la puissance voulue et la surface des cellules.

L'invention permet ainsi d'utiliser un moteur électrique sans commutation électrique ou mécanique. Le moteur de l'invention permet ainsi de réduire les coûts globaux de maintenance et le prix de revient d'un moteur électrique, tout en maintenant le niveau de performance dudit moteur.

## Revendications

1. Moteur (100) photovoltaïque autocommuté à reluctance variable comportant :
- un rotor (101) entraînant un arbre (107) mobile en rotation par rapport à un stator (103),
- le stator comportant plusieurs enroulements (104) définissant des phases du moteur,
**caractérisé en ce qu'**il comporte
- des cellules (105) photovoltaïques disposées autour du stator, chacune des cellules étant raccordée à un des enroulements du stator,
- un masque (106) fixé à l'arbre mobile et positionné de sorte à recouvrir les cellules photovoltaïques,
- le masque comportant au moins une ouverture (108) de commutation des cellules photovoltaïques.

2. Moteur selon la revendication 1, **caractérisé en ce que** les cellules photovoltaïques sont disposées en couronne autour du stator.

3. Moteur selon la revendication 1 ou 2, **caractérisé en ce que** le masque comporte quatre ouvertures disposées en paire diamétralement opposées.

4. Moteur selon l'une des revendications 1 à 3, **caractérisé en ce que** le masque est un disque opaque comportant des ouvertures percées.

5. Moteur selon l'une des revendications 1 à 4, **caractérisé en ce que** le masque est une succession de matériau opaque et de matériau transparent formant les ouvertures.

6. Moteur selon l'une des revendications 1 à 5, **caractérisé en ce que** le rotor comporte quatre branches (102) et le stator comporte six enroulements à 60 degrés les uns des autres, une paire d'enroulements diamétralement opposés définissant une phase du moteur.

7. Moteur selon la revendication 6, **caractérisé en ce que** les ouvertures sont disposées sur le masque de manière à ce qu'une seule paire de cellules photovoltaïques d'une paire d'enroulements d'une phase soit alimentée à la fois, lors de la rotation du moteur.

8. Moteur selon la revendication 7, **caractérisé en ce que** les ouvertures du masque sont à 90 degrés les unes des autres.

9. Moteur selon l'une des revendications 1 à 8, **caractérisé en ce qu'**il comporte des cellules photovoltaïques secondaires (110) dont chacune est reliée en série à une cellule photovoltaïque, une cellule secondaire étant placée sur la couronne par rapport à la cellule photovoltaïque avec laquelle elle est reliée en série, de sorte à permettre son éclairement lorsque ladite cellule est éclairée.

10. Moteur selon l'une des revendications 1 à 9, **caractérisé en ce qu'**il comporte une cellule photovoltaïque fixe (111) et toujours éclairée, ladite cellule fixe étant raccordée à au moins une bobine au travers de la cellule photovoltaïque correspondante.

11. Système dans lequel est installé un moteur (100) photovoltaïque autocommuté sans aimant à reluctance variable selon l'une des revendications précédentes.

## Patentansprüche

1. Selbstgeführter photovoltaischer Motor (100) mit variabler Reluktanz, umfassend:
- einen Rotor (101), der eine Welle (107) antreibt, die relativ zu einem Stator (103) drehbeweglich ist,
- wobei der Stator mehrere Wicklungen (104) aufweist, die Phasen des Motors definieren,
**dadurch gekennzeichnet, dass** er Folgendes aufweist:
- photovoltaische Zellen (105), die um den Stator angeordnet sind, wobei jede der Zellen mit einer der Wicklungen des Stators verbunden ist,
- eine Maske (106), die an der beweglichen Welle befestigt ist und derart angeordnet ist, um die photovoltaischen Zellen zu bedecken,
- wobei die Maske mindestens eine Öffnung (108) zum Umschalten der photovoltaischen Zellen aufweist.

2. Motor nach Anspruch 1, **dadurch gekennzeichnet, dass** die photovoltaischen Zellen kranzförmig um den Stator angeordnet sind.

3. Motor nach Anspruch 1 oder 2, **dadurch gekennzeichnet, dass** die Maske vier Öffnungen aufweist, die paarweise diametral gegenüberliegend angeordnet sind.

4. Motor nach einem der Ansprüche 1 bis 3, **dadurch gekennzeichnet, dass** die Maske eine opake Scheibe ist, die gebohrte Öffnungen aufweist.

5. Motor nach einem der Ansprüche 1 bis 4, **dadurch gekennzeichnet, dass** die Maske eine Folge von opakem Material und von transparentem Material ist, die die Öffnungen bildet.

6. Motor nach einem der Ansprüche 1 bis 5, **dadurch gekennzeichnet, dass** der Rotor vier Zweige (102) aufweist und der Stator sechs um 60 Grad voneinander versetzte Wicklungen aufweist, wobei ein Paar diametral gegenüberliegender Wicklungen eine Phase des Motors definiert.

7. Motor nach Anspruch 6, **dadurch gekennzeichnet, dass** die Öffnungen auf der Maske derart angeordnet sind, dass ein einziges Paar photovoltaischer Zellen eines Paares Wicklungen einer Phase gleichzeitig bei der Drehung des Motors bestromt wird.

8. Motor nach Anspruch 7, **dadurch gekennzeichnet, dass** die Öffnungen der Maske um 90 Grad voneinander liegen.

9. Motor nach einem der Ansprüche 1 bis 8, **dadurch gekennzeichnet, dass** er photovoltaische Sekundärzellen (110) aufweist, wovon jede in Reihe mit einer photovoltaischen Zelle verbunden ist, wobei eine Sekundärzelle auf dem Kranz gegenüber der photovoltaischen Zelle, mit der sie in Reihe verbunden ist, derart angeordnet ist, um ihre Beleuchtung zu ermöglichen, wenn die Zelle beleuchtet wird.

10. Motor nach einem der Ansprüche 1 bis 9, **dadurch gekennzeichnet, dass** er eine photovoltaische Zelle, die fest (111) ist und immer beleuchtet wird, aufweist, wobei die feste Zelle mit mindestens einer Spule durch die entsprechende photovoltaische Zelle verbunden ist.

11. System, wobei ein magnetloser selbstgeführter photovoltaischer Motor (100) mit variabler Reluktanz nach einem der vorhergehenden Ansprüche montiert ist.

## Claims

1. Self-switched photovoltaic motor (100) with variable reluctance comprising:
- a rotor (101) driving a shaft (107) that is rotationally mobile relative to a stator (103),
- the stator comprising a number of windings (104) defining phases of the motor,
**characterized in that** it comprises
- photovoltaic cells (105) arranged around the stator, each of the cells being connected to one of the windings of the stator,
- a mask (106) fixed to the mobile shaft and positioned so as to cover the photovoltaic cells,
- the mask comprising at least one opening (108) for switching the photovoltaic cells.

2. Motor according to Claim 1, **characterized in that** the photovoltaic cells are arranged in a ring around the stator.

3. Motor according to Claim 1 or 2, **characterized in that** the mask comprises four openings arranged in diametrically opposing pairs.

4. Motor according to one of Claims 1 to 3, **characterized in that** the mask is an opaque disc comprising pierced openings.

5. Motor according to one of Claims 1 to 4, **characterized in that** the mask is a succession of opaque material and transparent material forming the openings.

6. Motor according to one of Claims 1 to 5, **characterized in that** the rotor comprises four branches (102) and the stator comprises six windings at 60° relative to one another, a pair of diametrically opposing windings defining a phase of the motor.

7. Motor according to Claim 6, **characterized in that** the openings are arranged on the mask in such a way that just one pair of photovoltaic cells of a pair of windings of a phase is powered at a time, during the rotation of the motor.

8. Motor according to Claim 7, **characterized in that** the openings of the mask are at 90° relative to one another.

9. Motor according to one of Claims 1 to 8, **characterized in that** it comprises secondary photovoltaic cells (110), each of which is linked in series to a photovoltaic cell, a secondary cell being placed on the ring relative to the photovoltaic cell with which it is linked in series, so as to allow it to be illuminated when said cell is illuminated.

10. Motor according to one of Claims 1 to 9, **characterized in that** it comprises a fixed photovoltaic cell (111) that is always illuminated, said fixed cell being connected to at least one coil through the corresponding photovoltaic cell.

11. System in which is installed a magnetless self-switched photovoltaic motor (100) with variable reluctance according to one of the preceding claims.
